# EUROPÄISCHE PATENTANMELDUNG

(11) **EP 2 096 154 A1**
(43) Veröffentlichungstag der Anmeldung: **02.09.2009**
(21) Anmeldenummer: 09152548.5
(22) Anmeldetag: 11.02.2009
(51) Int. Cl.: C09J 7/02, G09F 3/02, G09F 3/10

(54) **Mehrschichtiger Klebeartikel zur Verwendung als Erstöffnungsnachweis**

(30) Priorität: 28.02.2008 DE 102008011536
(71) Anmelder: TESA SE, 20253 Hamburg (DE)
(72) Erfinder: Tuffe, David, 20459, Hamburg (DE); Escudero Vallejo, Aranzazu, 22055, Hamburg (DE)

(57) **Zusammenfassung**

Mehrschichtiger Klebeartikel zur Verwendung als Erstöffnungsnachweis mit einem Träger, einer nicht vollflächig aufgetragenen adhäsionssteuernden Funktionsschicht, mindestens einer vollflächig aufgetragenen Farbschicht und einer Klebmasseschicht, **dadurch gekennzeichnet, dass** die adhäsionssteuernde Funktionsschicht punktweise in Form punktförmiger Bereiche aufgebracht ist.

## Beschreibung

Die vorliegende Erfindung betrifft einen mehrschichtigen Klebeartikel zur Verwendung als Erstöffnungsnachweis gemäß dem Oberbegriff von Anspruch 1.

Der Schutz von Waren, die sich in der logistischen Kette von Produzenten zum Verwender befinden, ist durch die Vielzahl der Glieder in dieser Kette schwierig. So ist der Schaden, der durch Diebstahl der Ware aus ihrer Versandverpackung während des Lagerns und des Transports verursacht wird, zu einem bedeutenden Kostenfaktor angestiegen. Der Empfänger einer Versandeinheit, in der ein Teil der Ware durch Diebstahl entnommen oder ausgetauscht wurde, hat zudem Schwierigkeiten zu beweisen, dass diese Manipulation nicht in seinem eigenen Einflussbereich vorgenommen wurde. Eine bedeutend höhere Sicherheit gegen den Versuch eines Diebstahls und ein sicherer Nachweis, dass eine Versandeinheit vor Übernahme in den nächsten Abschnitt der logistischen Kette geöffnet wurde, ermöglicht ein Klebeartikel, der durch eine irreversible Botschaft anzeigt, dass dieser schon einmal von der Oberfläche des Klebeuntergrunds abgelöst wurde. Ein solcher Nachweis wird auch als "Tamper Evident-Effekt" bezeichnet.

Ein gattungsgemäßer mehrschichtiger Klebeartikel wird üblicherweise dazu verwendet, die Erstöffnung eines mit dem Klebeartikel gekennzeichneten Gegenstandes, wie einer Tür oder eines Behältnisses, anzuzeigen. Dazu weisen derartige Klebeartikel typischerweise zumindest ein optisches Merkmal auf, das einen Öffnungsversuch, wie ein Ablösen von dem mit dem Klebeartikel versehenen Gegenstand, irreversibel anzeigt. Derartige Klebeartikel dienen insofern als Siegel für die Unversehrtheit des Gegenstandes vor Erstöffnung. Der Klebeartikel wird hierzu auf den Gegenstand derart aufgeklebt, dass dieser ohne ein Ablösen oder Zerschneiden des Klebeartikels nicht geöffnet werden kann. Hierzu muss der Klebeartikel derart mit dem Gegenstand verbunden sein, dass ein Ablösen und anschließendes Wiederaufbringen nicht ohne sichtbare Beeinträchtigungen möglich ist. Dies wird üblicherweise durch eine geeignete Klebeverbindung mit dem Gegenstand in Kombination mit einem optischen Merkmal erreicht. Ein derartiger Klebeartikel ist üblicherweise als Sicherheitsetikett mit begrenzten Abmessungen, wie z.B. ein Stanzling, oder bandförmig ausgebildet, beispielsweise als Klebeband.

Insbesondere zeigt ein gattungsgemäßer mehrschichtiger Klebeartikel ein erstes Entfernen desselben von dem mit dem Klebeartikel versehenen Gegenstand an, indem Bereiche des Klebeartikels beim Ablösen von der beklebten Oberfläche aus dem Klebeartikel herausgelöst werden und als Botschaft auf der Oberfläche verbleiben, wobei die Botschaft vor dem Ablösen von der Oberfläche nicht erkennbar ist. Die Botschaft bleibt dabei erkennbar, auch wenn der Klebeartikel nach dem Ablösen wieder exakt an der ursprünglichen Verklebungsstelle angelegt wird.

Aus dem Stand der Technik sind verschiedene mehrschichtige Klebeartikel bekannt. Diese Klebeartikel weisen einen Schichtaufbau mit unterschiedlich stark aneinander haftenden Schichten auf. Dieser Schichtaufbau ist vor einem ersten Ablöseversuch mit dem bloßen Auge üblicherweise nicht zu erkennen. Bei einem Ablöseversuch wird der Schichtaufbau jedoch aufgrund lokal unterschiedlicher Klebkräfte zerstört, so dass eine sichtbare Beeinträchtigung des Sicherheitsetiketts bestehen bleibt, die auch nicht durch ein Wiederverkleben der betroffenen Schichten rückgängig gemacht werden kann. Die Beeinträchtigung kann beispielsweise darin bestehen, dass durch das Ablösen einzelner Schichten ein Schriftzug erkennbar wird. Diesen Klebeartikeln ist gemeinsam, dass sie neben weiteren Schichten jedenfalls eine nicht vollflächig aufgetragene adhäsionssteuernde Funktionsschicht aufweisen. Je nach Ausgestaltung handelt es sich bei einer derartigen adhäsionssteuernden Funktionsschicht um eine Primerschicht oder eine Releaseschicht. Die adhäsionssteuernde Funktionsschicht dient dazu, einzelne Bereiche des mehrschichtigen Klebeartikels lokal stärker oder schwächer zu verankern, um gezielt Bruchstellen innerhalb des mehrschichtigen Klebeartikels zu schaffen. Eine Primerschicht dient dabei der Verbesserung der Verankerung, währen eine Releaseschicht eine schwache Verankerung bewirken soll.

Die DE 199 63 709 A1 zeigt einen mehrschichtigen Klebeartikel mit einem Träger, auf den eine nicht vollflächig aufgetragene Primerschicht als adhäsionssteuernde Funktionsschicht aufgebracht ist, eine vollflächig über die aufgetragene Primerschicht und den Träger aufgetragene Trennschicht sowie eine vollflächig auf die Trennschicht aufgetragene Haftklebemasse. Die Primerschicht ist dabei so ausgebildet, dass sie sehr gut auf dem Träger verankert. Die darüber liegende Trennschicht verankert wiederum besser auf der Primerschicht als auf dem Träger. Die Haftklebemasse verankert besser auf der Trennschicht als auf dem Träger. Beim Entfernen dieses Klebeartikels von einem Verklebeuntergrund, beispielsweise der Oberfläche einer Verpackung, hinterlässt dieser eine Kennung auf der Verpackung, indem sich die erste Trennschicht von dem Träger abtrennt, während die Bereiche, die mittels Primer auf dem Träger gut verankert sind, mit dem Träger von der Oberfläche der Verpackung abgelöst werden. Der Bereich der ersten Trennschicht, der gegen den Träger mit der Primerschicht stark verankert wurde, verbleibt hingegen auf der Trägeroberfläche. Die Kennung auf der Verpackung entspricht somit einer Inversion der nicht vollflächigen Primerschicht.

Die US 5,633,058 offenbart einen mehrschichtigen Klebeartikel mit einem Träger, auf den eine nicht vollflächig aufgetragene Releaseschicht als adhäsionssteuernde Funktionsschicht aufgebracht ist, eine vollflächig über die aufgetragene Releaseschicht und den Träger aufgebrachte Farbschicht sowie eine vollflächig auf die Farbschicht aufgetragene Klebeschicht. An Stellen, an denen Release vorhanden ist, löst sich bei einem Ablösevorgang die Farbschicht vom Träger. An Stellen, an denen kein Release vorgesehen ist, bleibt die Farbe auf dem Träger verankert. Es entsteht während des Ablösevorgangs also ein partieller Farbtransfer, der als optischer Effekt zur Anzeige der Erstöffnung dient.

Die aus dem Stand der Technik bekannten gattungsgemäßen mehrschichtigen Klebeartikel zeigen somit eine Erstöffnung zufrieden stellend an. Jedoch kommt es bei der Erstöffnung häufig zu einer unvollständigen Trennung der jeweiligen Schichten. Die ursprünglich vorgesehene Kennung ist daher oftmals aufgrund von Schatteneffekten oder zusammengelaufenen Bereichen nicht mehr eindeutig oder nur schwer erkennbar (vgl.
Fig. 2, 3).

Der vorliegenden Erfindung liegt das Problem zugrunde, einen mehrschichtigen Klebeartikel zu schaffen, der hinsichtlich des Tamper Evident-Effekts optimiert ist, so dass ein optischer Sicherheitseffekt während des Öffnens in verbesserter Qualität entsteht.

Die vorliegende Erfindung löst das zuvor beschriebene Problem bei einem mehrschichtigen Klebeartikel mit den Merkmalen des Oberbegriffs von Anspruch 1 durch die Merkmale des kennzeichnenden Teils von Anspruch 1. Bevorzugte Ausgestaltungen und Weiterbildungen sind Gegenstand der Unteransprüche.

Bei der vorliegenden Erfindung wurde erkannt, dass sich die Trennung der jeweiligen Bereiche und Schichten eines mehrschichtigen Klebeartikels positiv beeinflussen lässt, wenn die adhäsionssteuernde Funktionsschicht nicht zusammenhängend sondern punktweise, also in sogenannten punktförmigen Bereichen, aufgebracht ist. Unerwünschte Effekte wie Schatteneffekte und ein "Ausfransen" der Kennung sind durch die Punktform stärker lokalisiert, wodurch die nach der Erstöffnung sichtbare Kennung schärfer erscheint. Die an sich unerwünschten Effekte können zwar nach wie vor auftreten, jedoch ist deren Einfluss auf die Deutlichkeit und Lesbarkeit der Kennung reduziert.

Eine symmetrische Ausbildung der Punkte beziehungsweise punktförmigen Bereiche ist zur Vermeidung der Bildung von Schattenbereichen, des Ausfransens und des Zusammenlaufens nicht zwingend erforderlich, vielmehr können die punktförmigen Bereiche nahezu beliebige Formen aufweisen, beispielsweise können diese kreisförmig, elliptisch, oder polygonförmig ausgebildet sein.

Durch eine besonders gute Abstimmung der Adhäsionskräfte der unterschiedlichen Schichten zueinander in Verbindung mit einer Abstimmung von Punktgröße und Abstand der einzelnen Punkte, können die zuvor beschriebenen unerwünschten Effekte nahezu vollständig verhindert werden.

Neben der einen zuvor beschriebenen Funktionsschicht kann der Klebeartikel auch weitere, ggf. ebenfalls adhäsionssteuernde Funktionsschichten aufweisen. Eine derartige zusätzliche Funktionsschicht kann beispielsweise komplementär zu der adhäsionssteuernden Funktionsschicht angeordnet sein, also in einer anderen Schicht und nur in den Bereichen, die nicht oberhalb oder unterhalb der adhäsionssteuernden Funktionsschicht liegen. In einem derartigen Fall kann diese zusätzliche Funktionsschicht gleichartig zu der adhäsionssteuernden Funktionsschicht ausgebildet sein, beide Funktionsschichten beispielsweise als Primerschicht oder beide Funktionsschichten als Releaseschichten. Auch kann eine zusätzliche Funktionsschicht in einer anderen Schicht als die adhäsionssteuernde Funktionsschicht in den Bereichen, die oberhalb oder unterhalb der adhäsionssteuernden Funktionsschicht liegen, angeordnet sein. Bei einer derartigen Ausgestaltung ist es vorteilhaft, wenn beide Funktionsschichten andersartig ausgebildet sind, also eine Funktionsschicht als Releaseschicht und die andere Funktionsschicht als Primerschicht. Es sind aber auch beliebige andere Ausgestaltungen hinsichtlich Anordnung und Ausführung mehrerer Funktionsschichten möglich.

In bevorzugter Ausgestaltung ist vorgesehen, dass die Punktform in Ablöserichtung des Klebeartikels eine im Wesentlichen punktförmige Grenze ausbildet. Die Ablöserichtung des Klebeartikels definiert die Richtung, in der der Klebeartikel üblicherweise von seinem Verklebeuntergrund abgezogen wird. Die Ablöserichtung entspricht in den meisten Fällen, insbesondere bei einem Klebeband, der Bahnrichtung bzw. der Längsachse des Klebeartikels. Ein Scheitelpunkt, der in Richtung der Ablöserichtung deutet, ist besonders vorteilhaft, um den Vorgang des Ablösens an einem erfindungsgemäß punktförmigen Bereich gleichmäßig zu beginnen. Der Ausdruck "Scheitelpunkt" bezeichnet dabei vorliegend keinen mathematisch streng definierten Punkt sondern vielmehr eine in seinen Abmessungen begrenzten, aber technisch realisierbaren Bereich (beispielsweise durch Aufbringen der adhäsionssteuernden Funktionsschicht mittels Siebdruck oder dergleichen). Der Scheitelpunkt kann beispielsweise durch eine Krümmung oder einen Winkel gebildet sein. Der Scheitelpunkt dient dabei als eine Art "Keimzelle" für den Ablösevorgang, der dann relativ gleichmäßig fortgesetzt wird, bis sich der entsprechende punktförmige Bereich vollständig abgelöst hat. Ist die Grenze hingegen breiter und zudem senkrecht zur Ablöserichtung ausgebildet, kann der Ablösevorgang nicht immer gleichmäßig ausgelöst werden und es kommt zu den unerwünschten Schattenbereichen /Ausfransen an den Rändern der partiell aufgetragenen adhäsionssteuernden Funktionsschicht. Die Qualität der Erstöffnungs-Kennzeichnung ist dann unter Umständen nicht optimal.

Begrenzungslinien erfindungsgemäßer punktförmiger Bereiche können gerade oder gekrümmt sein, insbesondere konvex.

In weiter bevorzugter Ausgestaltung sind die punktförmigen Bereiche der adhäsionssteuernden Funktionsschicht mit einem Mindestabstand zueinander aufgebracht. Durch den Mindestabstand kann gewährleistet werden, dass zwischen den punktförmigen Bereichen angeordnete Bereiche nicht versehentlich mit abgelöst werden, so dass ein Zusammenlaufen der punktförmigen Bereiche und somit eine unscharfe Kennung vermieden werden kann. Insbesondere hat sich gezeigt, dass als Mindestabstand zweier benachbarter punktförmiger Bereiche ein Mindestabstand größer als etwa ein Sechstel des Durchmessers der punktförmigen Bereiche geeignet ist. In bevorzugter Ausgestaltung ist der Mindestabstand größer als die Hälfte des Durchmessers der punktförmigen Bereiche, weiter vorzugsweise größer als Durchmesser der punktförmigen Bereiche selbst. Für Polygone sei unter Durchmesser derjenige Größenabschnitt verstanden, der einen das Polygon einhüllenden Kreis beschreibt.

Die Größe der punktförmigen Bereiche, insbesondere deren Durchmesser, beträgt vorzugsweise mindestens etwa 10 µm, weiter vorzugsweise mindestens etwa 50 µm. Ferner beträgt die Größe der punktförmigen Bereiche, insbesondere deren Durchmesser, maximal etwa 10 mm, vorzugsweise maximal etwa 5 mm, weiter vorzugsweise maximal etwa 2 mm. Ein relativ großer punktförmiger Bereich ist dabei vorteilhaft, damit eine Kennung möglichst leicht mit bloßem Auge wahrnehmbar ist und die partielle Aufbringung der adhäsionssteuernden Funktionsschicht möglichst schnell erfolgen kann. Demgegenüber ist ein kleine Ausbildung der punktförmigen Bereiche vorteilhaft, um eine gute Qualität der Erstöffnungs-Kennung zu erzielen. Die zuvor angegebenen Werte für die Größe der punktförmigen Bereiche haben sich dabei als besonders geeignet zur Erzielung der zuvor beschriebenen Anforderungen bewährt.

Es sei angemerkt, dass es für einen Betrachter umso einfacher wird, eine Botschaft oder eine Grafik, die sich aus dem Punktraster zusammensetzt, zu erkennen, je kleiner die erfindungsgemäßen punktförmigen Bereiche und deren Abstände ausgestaltet sind. Auch dieser Aspekt wird bei der Auslegung eines Punktrasters typischerweise berücksichtigt.

Die adhäsionssteuernde Funktionsschicht ist nicht vollflächig aufgetragen. In bevorzugter Ausgestaltung ist die adhäsionssteuernde Funktionsschicht dabei als Muster ausgebildet, wodurch ein entsprechender Wiedererkennungseffekt nach der Erstöffnung geschaffen wird. Bei dem Muster kann es sich beispielsweise um ein Logo, einen Schriftzug, Zahlen oder Kombinationen dergleichen handeln. Insbesondere ist dabei vorgesehen, dass eine Mehrzahl von punktförmigen Bereichen der adhäsionssteuernden Funktionsschicht, eine so genannte Punktgruppe, ein Element des Musters bildet, beispielsweise also einen Buchstaben oder eine Zahl.

In weiter bevorzugter Ausgestaltung des mehrschichtigen Klebeartikels ist die adhäsionssteuernde Funktionsschicht derart ausgebildet und angeordnet, dass die punktförmigen Bereiche der adhäsionssteuernden Funktionsschicht nach der Erstöffnung nicht nur gemeinsam die Erstöffnung anzeigen, sondern dass sich auch mehrere punktförmige Bereiche der adhäsionssteuernden Funktionsschicht untereinander unterscheiden, so dass nach Erstöffnung des Klebeartikels ein zusätzlicher optischer Effekt zwischen diesen punktförmigen Bereichen sichtbar ist. Dieser zu dem eigentlichen Erstöffnungsnachweis zusätzliche Effekt kann zwischen einzelnen punktförmigen Bereichen untereinander sichtbar sein oder zwischen ganzen Punktgruppen. Der zusätzliche optische Effekt kann beispielsweise dadurch erzielt werden, dass ein aus mehreren punktförmigen Bereichen gebildetes Muster (z.B. ein Buchstabe) anders angezeigt wird als ein aus anderen punktförmigen Bereichen gebildetes Muster (z.B. ein weiterer Buchstabe). Der optische Effekt kann beispielsweise durch unterschiedliche optische Eigenschaften der jeweiligen punktförmigen Bereiche ausgebildet sein. Dabei unterscheidet sich in bevorzugter Ausgestaltung die adhäsionssteuernde Funktionsschicht selbst in den jeweiligen Bereichen voneinander, beispielsweise indem sie unterschiedliche Farbstoffe, fluoreszierende Pigmente oder andere die optischen Eigenschaften, wie z.B. die Transmission und/oder die Reflektion, beeinflussende Materialien enthält. Dieser Effekt kann aber ebenfalls durch eine oder mehrere zusätzliche Funktionsschichten ausgebildet werden, die bevorzugt ebenfalls nicht vollflächig aufgetragen sind. Je nachdem in welcher optischen Eigenschaft sich die punktförmigen Bereiche voneinander unterscheiden, kann dieser zusätzliche optische Effekt direkt sichtbar sein, oder aber es sind Hilfsmittel zur Erkennung des optischen Effekt notwendig, wie zum Beispiel bestimmte Lichtquellen zur Erkennung einer Fluoreszenz oder unterschiedlicher Reflexionseigenschaften.

Zum Verkleben des Klebeartikels auf einem zu sichernden Gegenstand weist der Klebeartikel eine Klebmasseschicht an seiner Unterseite auf. Bei dieser handelt es sich bevorzugt um eine Haftklebeschicht, wie dies allgemein bekannt ist. Die Klebmasseschicht ist bevorzugt mit einem Trennmaterial abgedeckt, um ein vorheriges unerwünschtes Verkleben des Klebeartikels zu vermeiden. Dies bietet sich vor allem an, wenn erfindungsgemäße Klebeartikel als Etikett ausgestaltet sind. Klebeartikel in Form von Klebebändern werden bevorzugt zu Rollen gewickelt. Das Abrollen von der Rolle wird dann typischerweise durch eine auf der Trägerrückseite befindliche Trennschicht gewährleistet.

Weiter kann vorgesehen sein, dass der Klebeartikel eine graphische Kennzeichnung, beispielsweise in Form einer Bedruckung aufweist. Für eine derartige Kennzeichnung eignet sich insbesondere der Träger des Klebeartikels, aber auch die Klebmasse oder andere Schichten des Klebeartikels können eine Bedruckung aufweisen.

Weitere Einzelheiten, Merkmale und Ziele der vorliegenden Erfindung werden nachfolgend anhand eines Ausführungsbeispiels näher erläutert. In der Zeichnung zeigt
- Fig. 1: in schematischer Darstellung einen aus dem Stand der Technik bekannten Klebeartikel vor Erstöffnung,
- Fig. 2: den Klebeartikel aus Fig. 1 nach Erstöffnung,
- Fig. 3: Beispiele für "Ausfransen" und "Schattenbildung" bei Sicherheitseffekten nach dem Stand der Technik, dargestellt in Draufsicht auf den Klebeartikel aus Fig. 2,
- Fig. 4: in schematischer Ansicht einen erfindungsgemäßen mehrschichtigen Klebeartikel vor der Erstöffnung,
- Fig. 5: den Klebeartikel aus Fig. 4 nach der Erstöffnung,
- Fig. 6: den Klebeartikel aus Fig. 5 in Draufsicht.

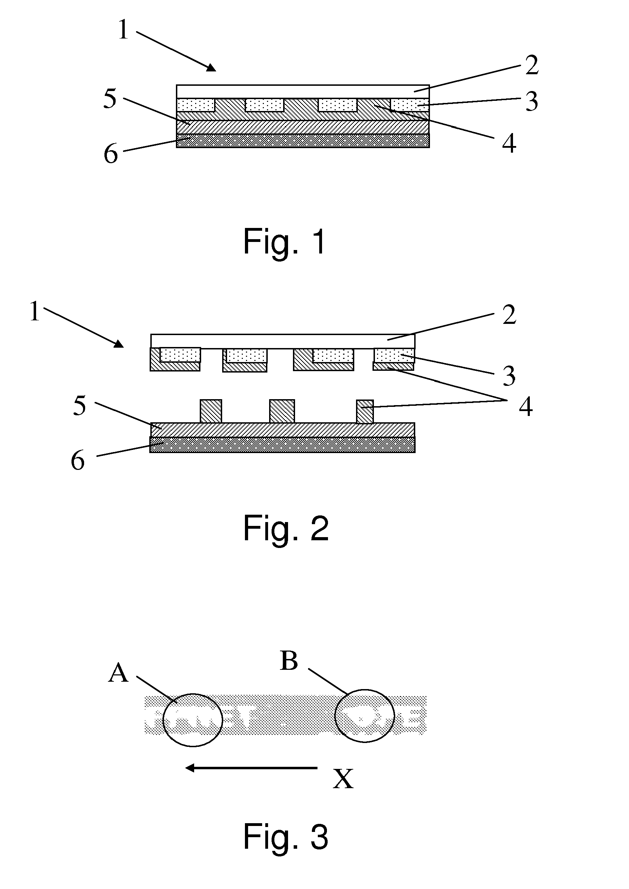

Fig. 1 zeigt in schematischer Darstellung einen aus dem Stand der Technik bekannten Klebeartikel 1 vor Erstöffnung. Ein derartiger Klebeartikel 1 wird üblicherweise zur Sicherung eines Objekts, wie zum Beispiel eines Verschlusses oder eines Kartons eingesetzt. Der Klebeartikel 1 weist einen Träger 2 auf Basis einer Thermoplastfolie auf. Diese Thermoplastfolie 2 ist partiell mit einer adhäsionssteuernden Funktionsschicht 3, vorliegend einer Primerschicht, beschichtet. Die Funktionsschicht 3 und die Bereiche des Trägers 2, die nicht von der Funktionsschicht 3 bedeckt sind, sind vollflächig mit einer ersten Farbschicht 4 bedeckt. Die erste Farbschicht 4 ist sodann mit einer zweiten Farbschicht 5, die unterschiedlich zu der ersten Farbschicht 4 ist, bedeckt. Unterhalb der zweiten Farbschicht 5 ist eine Klebmasseschicht angeordnet, mittels der der Klebeartikel 1 auf dem zu sichernden Gegenstand festgelegt werden kann.

Fig. 2 zeigt den aus dem Stand der Technik bekannten Klebeartikel 1 in schematischer Darstellung nach einer Erstöffnung. Dieser Darstellung ist zunächst zu entnehmen, dass in den Bereichen, in denen der Primer 3 angeordnet ist, eine Trennung zwischen der ersten Farbschicht 4 und der zweiten Farbschicht 5 stattgefunden hat. Diese Trennung ist auf die unterschiedlichen Adhäsionskräfte der jeweiligen Schichten untereinander zurückzuführen, wie dies aus dem Stand der Technik bekannt ist. Dadurch, dass die erste Farbschicht 4 in den Bereichen, in denen kein Primer war, auf der zweiten Farbschicht 5 zurückbleibt, ergibt sich die gewünschte Markierung des mit dem Klebeartikel 1 zu sichernden Gegenstandes.

Aus Fig. 2 wird jedoch auch deutlich, dass nach der Erstöffnung auch weiterhin Teile der ersten Farbschicht 4 unmittelbar an dem Träger 2 angeordnet sind. Die Trennung ist also nicht überall in der gewünschten Weise erfolgt, nämlich derart, dass die erste Farbschicht 4 nicht mehr in direktem Kontakt zu dem Träger 2 ist, sondern ausschließlich im Bereich der Funktionsschicht 3 mit dieser verbunden bleibt und in den anderen Bereichen mit der zweiten Farbschicht 5 verbunden bleibt. Diese teilweise an den falschen Stellen erfolgte Trennung innerhalb der ersten Farbschicht 4 führt zu einer Beeinträchtigung der Kennung. Insbesondere aus der Fig. 3, die den Klebeartikel aus Fig. 2 in Draufsicht zeigt, wird die verminderte Qualität der Kennung deutlich. Im Bereich A sind beispielsweise mehrere Buchstaben zusammengelaufen, so dass die Buchstaben "F" und "N" nur durch den Kontext in dem sie stehen zu erkennen sind. Die verminderte Qualität der Kennung zeigt sich beispielsweise auch im Bereich B anhand eines Schattenwurfs des Buchstabens "O".

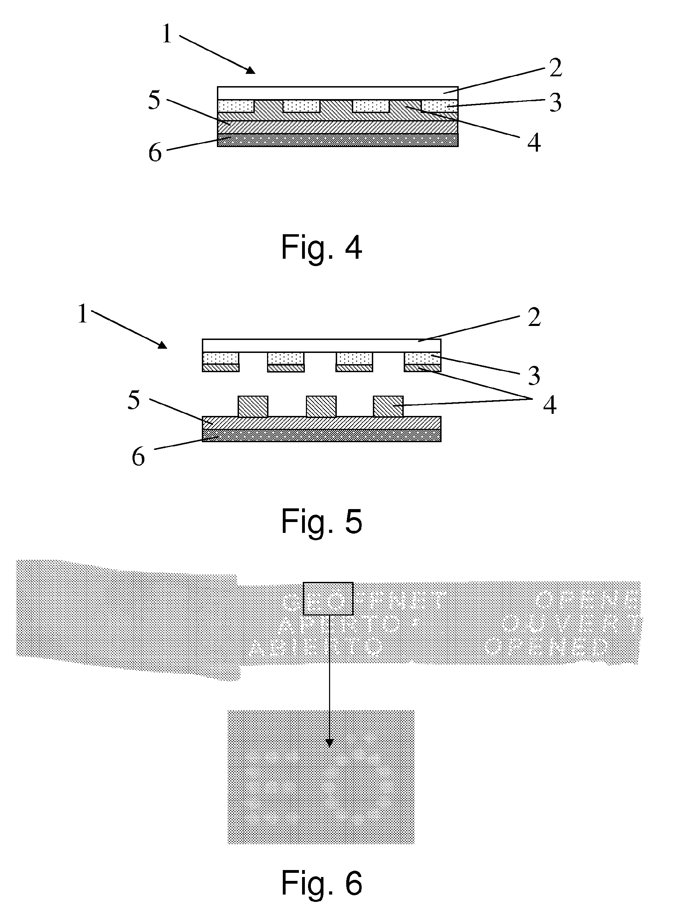

Demgegenüber zeigen die Fig. 4 - 6 einen erfindungsgemäßen Klebeartikel 1, bei dem die zuvor beschriebenen Qualitätseinbußen nicht oder jedenfalls deutlich vermindert auftreten. Fig. 4 zeigt einen Klebeartikel 1 in schematischer Ansicht vor der Erstöffnung. Der Klebeartikel 1 ist grundsätzlich analog zu dem aus dem Stand der Technik bekannten Klebeartikel aufgebaut.

Der Klebeartikel 1 weist einen Träger 2 auf. Ein derartiger Träger 2 ist üblicherweise als Thermoplastfolie ausgeführt, insbesondere auf Basis von Polyethylenterphthalat (PET), Polypropylen (PP) oder Polyvinylchlorid (PVC). Dieser Träger 2 ist partiell mit einer adhäsionssteuernden Funktionsschicht 3 beschichtet. Die adhäsionssteuernden Funktionsschicht 3 ist vorliegend also unmittelbar auf den Träger 2 aufgebracht. Grundsätzlich können aber auch weitere Schichten zwischen Träger 2 und adhäsionssteuernden Funktionsschicht 3 vorgesehen sein. Bei der adhäsionssteuernden Funktionsschicht 3 kann es sich um eine Primerschicht handeln, die eine gute Verankerung bewirkt, oder um eine Releaseschicht, die eine relativ schwache Verankerung bewirkt. Vorliegend handelt es sich bei der Funktionsschicht 3 um eine Primerschicht. Der Träger 2 sowie die Funktionsschicht 3 sind sodann mit einer ersten Farbschicht 4 vollflächig überdeckt. Die Farbschicht 4 ist somit unmittelbar auf die adhäsionssteuernde Funktionsschicht 3 bzw. den Träger 2 aufgebracht. Das vorliegende Ausführungsbeispiel zeigt zudem noch eine zweite Farbschicht 5, die die erste Farbschicht 4 vollflächig überdeckt. Eine derartige zweite Farbschicht 5 ermöglicht eine Kontrastbildung zwischen der ersten Farbschicht 4 und der zweiten Farbschicht 5 unabhängig vom Verklebeuntergrund. Eine zweite Farbschicht 5 ist jedoch nicht zwingend erforderlich, insbesondere dann nicht, wenn der Klebeartikel 1 zur Verklebung auf kontrastreichen Untergründen vorgesehen ist. Unterhalb der zweiten Farbschicht 5 ist eine Klebmasseschicht 6 vollflächig vorgesehen, die zur Verklebung des Klebeartikels mit dem zu sichernden Gegenstand dient. Die Klebmasseschicht 6 ist dabei vorzugsweise als Haftklebeschicht vorgesehen, wie dies aus dem Stand der Technik bekannt ist.

Sofern eine zweite Farbschicht 5 vorgesehen ist, ist es nicht zwingend erforderlich, dass diese zwischen der ersten Farbschicht 4 und der Klebmasseschicht 6 angeordnet ist, sie kann beispielsweise auch zwischen dem Träger 2 und der adhäsionssteuernden Funktionsschicht 3 vorgesehen sein.

Im Gegensatz zu dem aus dem Stand der Technik bekannten Klebeartikel ist die adhäsionssteuernde Funktionsschicht 3 nunmehr nicht als größerer zusammenhängender Bereich auf den Träger 2 aufgetragen, sondern vielmehr in Form vieler kleiner Bereiche mit begrenzter Dimension, also als Mehrzahl punktförmiger Bereiche. Muster, Zahlen, Buchstaben oder Grafiken sind also aus einem Punktraster aufgebaut.

Fig. 5 zeigt nunmehr den Klebartikel 1 aus Fig. 4 nach der Erstöffnung. Im Gegensatz zu dem Klebeartikel 1 der Fig. 2 wird nunmehr deutlich, dass die Trennung der ersten Farbschicht 4 von der zweiten Farbschicht 5 nur an den Stellen erfolgt ist, an denen die Funktionsschicht 3 unterhalb der ersten Farbschicht 4 angeordnet ist. Ein Verlaufen oder Ausfransen unterschiedlicher Bereiche sowie Schatteneffekte sind bei der vorliegenden Ausgestaltung weitgehend vermieden. Dies zeigt sich insbesondere auch in der Fig. 6, die den Klebeartikel 1 nach der Erstöffnung in Draufsicht zeigt. Bei dieser Abbildung ist besonders gut die sehr hohe Qualität der Kennung sichtbar. Ferner wird aus der Fig. 6 zudem die punktweise Aufbringung der Funktionsschicht 3 erkennbar. Jede einzelne Punktgruppe (Buchstabe) der Kennung, der im Stand der Technik durch einen zusammenhängenden Auftrag der Funktionsschicht ausgebildet wurde, besteht nunmehr aus einer Mehrzahl einzelner punktförmiger Bereiche. Diese Ausgestaltung ermöglicht die saubere Trennung der ersten Farbschicht 4 und der zweiten Farbschicht 5 in der gewünschten Art und Weise.

Aus Fig. 6 ist zudem zu erkennen, dass die punktförmigen Bereiche in Ablöserichtung des Klebeartikels 1, hier in Richtung X, einen Scheitelpunkt aufweisen und sich von diesem Punkt ausgehend in Ablöserichtung verbreitern. Durch diese Ausgestaltung kann der Ablösevorgang an diesem Scheitelpunkt gestartet werden und sich dann bis zur maximalen Breite der punktförmigen Bereiche ausdehnen. Von der maximalen Ausdehnung ausgehend verjüngt sich der punktförmige Bereich dann wiederum und endet vorliegend ebenfalls in einem Scheitelpunkt. Beim Ablösevorgang wird die Trennung der beiden Farbschichten 4, 5 somit auch wieder langsam von Außen nach Innen abnehmend gestoppt, wodurch der Schattenwurf beziehungsweise das Ausfransen des jeweiligen punktförmigen Bereichs weitgehend vermieden wird. Es hat sich hierbei herausgestellt, dass eine kreisförmige Ausbildung der punktförmigen Bereiche besonders gut geeignet ist. Ferner sind besonders gut elliptische oder polygonförmige Ausgestaltungen der punktförmigen Bereiche geeignet. Aber auch beliebige andere Formen sind denkbar, sofern die punktförmigen Bereiche eine gewisse Dimension nicht überschreiten.

Die Größe der punktförmigen Bereiche beträgt bei der hier gezeigten Ausgestaltung etwa 500 µm. Als besonders geeignet haben sich Größe zwischen mindestens etwa 10 µm, vorzugsweise mindestens etwa 50 µm und maximal etwa 10 mm, vorzugsweise maximal etwa 5 mm, weiter vorzugsweise maximal etwa 2 mm herausgestellt.

Um eine Verbindung benachbarter punktförmiger Bereiche bei der Erstöffnung zu vermeiden, sollten die punktförmigen Bereiche zueinander einen Mindestabstand aufweisen. Der Abstand zweiter benachbarter punktförmigen Bereiche sollte dabei größer als 1/6 des Durchmessers der punktförmigen Bereiche sein, vorzugsweise größer als die Hälfte des Durchmessers, weiter vorzugsweise größer als der Durchmessers selbst.

## Patentansprüche

1. Mehrschichtiger Klebeartikel zur Verwendung als Erstöffnungsnachweis mit einem Träger, einer nicht vollflächig aufgetragenen adhäsionssteuernden Funktionsschicht, mindestens einer vollflächig aufgetragenen Farbschicht und einer Klebmasseschicht,
**dadurch gekennzeichnet,**
**dass** die adhäsionssteuernde Funktionsschicht punktweise in Form punktförmiger Bereiche aufgebracht ist.

2. Mehrschichtiger Klebeartikel nach Anspruch 1, **dadurch gekennzeichnet, dass** die punktförmigen Bereiche in Ablöserichtung einen Scheitelpunkt aufweisen,
und/oder dass die punktförmigen Bereiche kreisförmig und/oder elliptisch und/oder polygonförmig ausgebildet sind.

3. Mehrschichtiger Klebeartikel nach Anspruch 1 oder 2, **dadurch gekennzeichnet, dass** der Abstand zweier benachbarter punktförmiger Bereiche größer als ein Sechstel des Durchmessers der punktförmigen Bereiche ist, vorzugsweise größer als die Hälfte des Durchmessers der punktförmigen Bereiche, weiter vorzugsweise größer als der Durchmesser der punktförmigen Bereiche.

4. Mehrschichtiger Klebeartikel nach einem der vorhergehenden Ansprüche,
**dadurch gekennzeichnet,**
**dass** die Größe der punktförmigen Bereiche mindestens etwa 10 µm, vorzugsweise mindestens etwa 50 µm beträgt.

5. Mehrschichtiger Klebeartikel einem der vorhergehenden Ansprüche, **dadurch gekennzeichnet,**
**dass** die Größe der punktförmigen Bereiche maximal etwa 10 mm, vorzugsweise maximal etwa 5 mm, weiter vorzugsweise maximal etwa 2 mm beträgt.

6. Mehrschichtiger Klebeartikel nach einem der vorhergehenden Ansprüche,
**dadurch gekennzeichnet,**
**dass** die adhäsionssteuernde Funktionsschicht als Muster ausgebildet ist,
insbesondere, dass eine Mehrzahl von punktförmigen Bereichen der adhäsionssteuernde Funktionsschicht - Punktgruppe - ein Element des Musters bilden.

7. Mehrschichtiger Klebeartikel nach einem der vorhergehenden Ansprüche,
**dadurch gekennzeichnet,**
**dass** die adhäsionssteuernde Funktionsschicht derart ausgebildet und angeordnet ist, dass sich mindestens zwei punktförmige Bereiche der adhäsionssteuernden Funktionsschicht derart unterscheiden, dass nach Erstöffnung des Klebeartikels zwischen diesen punktförmigen Bereichen ein zusätzlicher optischer Effekt sichtbar ist.

8. Mehrschichtiger Klebeartikel nach Anspruch 7, **dadurch gekennzeichnet,**
**dass** der zusätzliche optische Effekt durch unterschiedliche optische Eigenschaften der punktförmigen Bereiche ausgebildet ist, insbesondere durch unterschiedliche Farben, unterschiedliche Fluoreszenz, unterschiedliche Reflexion und/oder unterschiedliche Transmission.

9. Mehrschichtiger Klebeartikel nach einem der vorhergehenden Ansprüche,
**dadurch gekennzeichnet,**
**dass** die adhäsionssteuernde Funktionsschicht unmittelbar auf die Unterseite des Trägers aufgebracht ist,
**dass** die Farbschicht auf die adhäsionssteuernde Funktionsschicht und die freie Thermoplastfolienoberfläche aufgebracht ist und
**dass** die Klebmasseschicht auf die Farbschicht aufgebracht ist.

10. Mehrschichtiger Klebeartikel nach einem der vorhergehenden Ansprüche,
**dadurch gekennzeichnet,**
**dass** eine zweite vollflächig aufgetragene Farbschicht vorgesehen ist, vorzugsweise, dass die zweite Farbschicht zwischen der ersten Farbschicht und der Klebmasseschicht angeordnet ist.

11. Mehrschichtiger Klebeartikel nach einem der vorhergehenden Ansprüche,
**dadurch gekennzeichnet,**
**dass** die adhäsionssteuernde Funktionsschicht als Primerschicht ausgebildet ist.

12. Mehrschichtiger Klebeartikel nach einem der vorhergehenden Ansprüche,
**dadurch gekennzeichnet,**
**dass** die adhäsionssteuernde Funktionsschicht als Releaseschicht ausgebildet ist.

13. Mehrschichtiger Klebeartikel nach einem der vorhergehenden Ansprüche,
**dadurch gekennzeichnet,**
**dass** der Träger an seiner Oberseite eine Bedruckung aufweist.

14. Mehrschichtiger Klebeartikel nach einem der vorhergehenden Ansprüche,
**dadurch gekennzeichnet,**
**dass** die Klebmasseschicht als Haftklebeschicht ausgebildet ist.

15. Mehrschichtiger Klebeartikel nach einem der vorhergehenden Ansprüche,
**dadurch gekennzeichnet,**
**dass** die Klebmasseschicht mit einem Trennmaterial abgedeckt ist.

16. Mehrschichtiger Klebeartikel nach einem der vorhergehenden Ansprüche,
**dadurch gekennzeichnet,**
**dass** er vor der Verwendung zu einer Rolle aufgewickelt vorliegt und die Trägerrückseite mit einer Trennschicht versehen ist.
